## Europäisches Patentamt

## European Patent Office

## Office européen des brevets

(19)

(11) Veröffentlichungsnummer: **0 369 250**
**A2**

(12) **EUROPÄISCHE PATENTANMELDUNG**

(21) Anmeldenummer: **89120325.9**

(22) Anmeldetag: **03.11.89**

(51) Int. Cl.5: **G06K 15/12**

(30) Priorität: **15.11.88 DE 3838632**

(43) Veröffentlichungstag der Anmeldung:
**23.05.90 Patentblatt 90/21**

(84) Benannte Vertragsstaaten:
**AT FR GB**

(71) Anmelder: **Agfa-Gevaert AG**

**D-5090 Leverkusen 1(DE)**

(72) Erfinder: **Van Boven, Hugo**
**Oostbergdreef 6**
**B-2690 Temse(BE)**
Erfinder: **Demant, Michael**
**Hans-Jakob-Strasse 125**
**D-8000 München 82(DE)**

(54) **Computer-Output-Mikrofilm-Drucker und Verfahren zu dessen Verwendung.**

(57) Ein COM-(Computer-Output-Microfilm)Printer mit einem Textspeicher, einem diesem nachgeschalteten Zeichengenerator und einer durch letzteren betätigbaren Schreibeinheit zum Aufzeichnen von im Textspeicher enthaltenen Informationen auf Mikrofilm sowie mit einem Steuerrechner zum Auswählen der auf Mikrofilm aufzuzeichnenden Informationen, wobei der Steuerrechner einen Bildschirm aufweist, weist die Besonderheit auf, daß zwischen dem Zeichengenerator (7) und der Schreibeinheit (9) ein Mischer (8) angeordnet ist, dem aus einem Bildspeicher (12) Bildpunkte zuführbar sind, durch welche anstelle der vom Zeichengenerator (7) kommenden Zeichen oder zusätzlich hierzu, diesen überlagert, die Schreibeinheit (9) steuerbar ist, daß vor dem Textspeicher (6) bzw. dem Bildspeicher (12) eine Schnittstelle (5) angeordnet ist, mit der der Steuerrechner (2) einerseits und ein Scanner (11) zum Abtasten von Originalvorlagen andererseits verbunden ist. Hierdurch ist es möglich, entweder Originalvorlagen direkt mittels des COM-Printers oder deren Inhalte wahlweise zusammen mit Computer-Output-Informationen mikrozuverfilmen.

Fig.2

## Computer-Output-Microfilm-Printer und Verfahren zu dessen Verwendung

Die Erfindung betrifft einen COM-(Computer-Output-Mikrofilm)Printer mit einem Textspeicher, einem diesem nachgeschalteten Zeichengenerator und einer durch letzteren betätigbaren Schreibeinheit zum Aufzeichnen von im Textspeicher enthaltenen Informationen auf Mikrofilm sowie mit einem Steuerrechner zum Auswählen der auf Mikrofilm aufzuzeichnenden Informationen, wobei der Steuerrechner einen Bildschirm aufweist.

Derartige Geräte werden von verschiedenen Firmen in den Handel gebracht. Dabei wird herkömmlicher, lichtempfindlicher und anschließend chemisch zu entwickelnder Film verwendet, der entweder durch eine Kathodenstrahlröhre, deren Bilder von einem Computer gesteuert werden, oder durch einen computermodulierten Laserstrahl belichtet wird. Im Computer ist dabei gewöhnlich nur der reine, zu verfilmende Text ohne Briefkopf oder Formularvordruck gespeichert, so daß zur kompletten Verfilmung diesem Computertext auf jedem Mikrobild das entsprechende Formularbild überlagert werden muß. Zu diesem Zweck ist ein dem Aufnahmestrahlengang für den Computertext überlagerter Strahlengang vorhanden, in dessen Negativebene jeweils ein Dia mit einem Bild eines entsprechenden Formulars gebracht wird, das beleuchtet und durch ein Objektiv verkleinert wird. Diese Art der Formulareinbelichtung ist nicht anwendbar, wenn ein COM-Printer gemäß der DE-OS 36 15 780 vorgesehen ist, weil hier kein lichtempfindlicher Film Verwendung findet, also eine zusätzliche Auf- oder Einbelichtung eines beleuchteten Diabildes nicht möglich ist. Außerdem ist es bei keinem dieser bekannten COM-Printer möglich, herkömmliche Vorlagen auf Papier, im folgenden Originalvorlagen genannt, zu verfilmen, so daß für deren Verfilmung noch eine herkömmliche Mikrofilmkamera mit Transportmitteln für die Originalvorlagen und deren Ausgabe und einer Kamera für die Ablichtung derartiger, häufig im Format DIN A4 vorliegender Originalvorlagen zusätzlich erforderlich ist.

Der Erfindung liegt daher die Aufgabe zugrunde, einen COM-Printer der eingangs genannten Art und ein Verfahren zu dessen Verwendung zu schaffen, durch die es möglich ist, wahlweise mit dem COM-Printer auch herkömmliche Originalvorlagen auf Papier in den üblichen großen Formaten zu verfilmen.

Diese Aufgabe wird erfindungsgemäß gelöst durch die Merkmale des Hauptanspruchs bzw. durch die Verfahrensschritte gemäß dem Anspruch 4. Weitere vorteilhafte Merkmale der Erfindung sind den Unteransprüchen entnehmbar.

Der erfindungsgemäße COM-Printer ermöglicht dabei nicht nur die wahlweise Mikroverfilmung von auf Papier enthaltenen Originalvorlagen, sondern auch das Mischen derartiger Vorlagen als Formularvorlagen mit Computerinformationen auf einem Mikrobild.

Die Erfindung wird anhand von Zeichnungen näher erläutert. Es zeigen

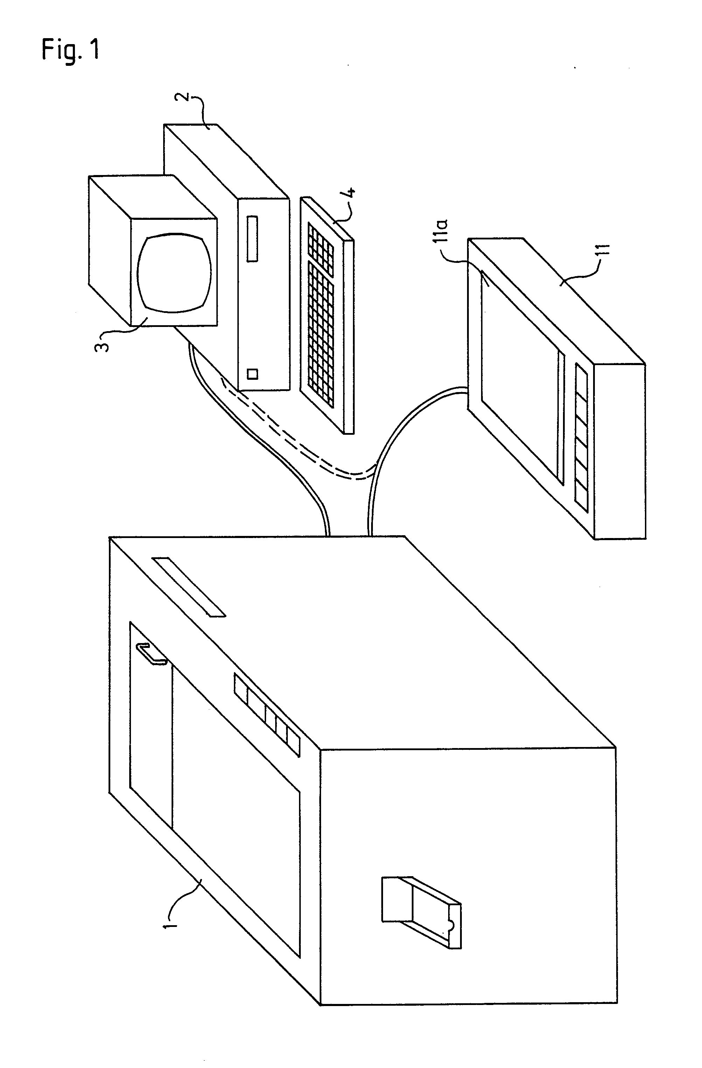

Fig. 1 eine schematische, perspektivische Darstellung eines erfindungsgemäßen COM-Printers,

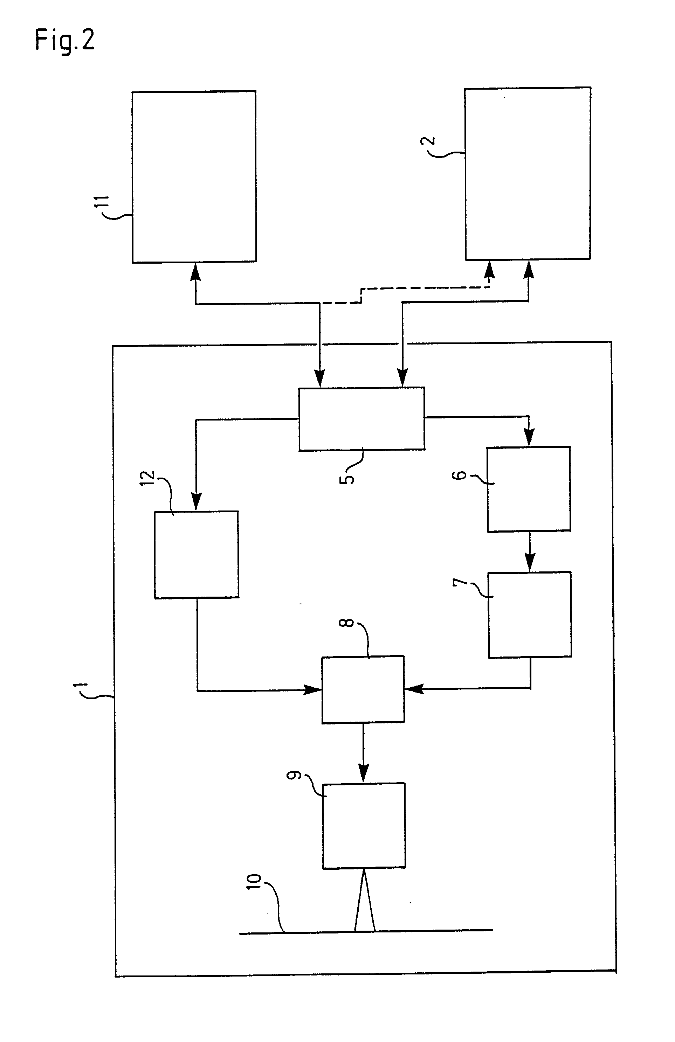

Fig. 2 ein Flußdiagramm für den COM-Printer nach Figur 1.

In den Figuren ist das Gehäuse des COM-Printers nur schematisch dargestellt und mit 1 bezeichnet. Bei dem COM-Printer kann es sich um jeden bekannten COM-Printer handeln, z.B. einen nach der DE-OS 36 15 780 oder einen anderen bekannten Typ, in dem ein Bildschirmbild abfotografiert wird, oder um einen Laserstrahlprinter für normalen lichtempfindlichen Film. Diese COM-Printer 1 sind jeweils mit einem Steuerrechner 2 verbunden, der einen Bildschirm 3 und eine Befehlstastatur 4 aufweist. Mittels der Befehlstastatur 4 werden im Speicher des Steuerrechners 2 die zu verfilmenden Texte aufgerufen und können am Bildschirm 3 kontrolliert werden. Dann werden die zu verfilmenden Texte an eine Schnittstelle 5 des Printers 1 übergeben und von dort in einen Textspeicher 6 desselben. In einem anschließenden Zeichengenerator 7 werden die gespeicherten Texte in Punktraster der Zeichen umgewandelt. Diese Zeichen-Punktraster werden in einen Mischer 8 überführt und steuern von hier aus die Schreibeinheit 9, durch die ein für die jeweilige Schreibeinheit 9 geeigneter Film 10 auf eine bekannte Art beschrieben bzw. belichtet wird. Wenn der Steuerrechner 2 keinen eigenen Speicher aufweist, werden die zu verfilmenden und auf dem Bildschirm 3 sichtbar werdenden Texte primär im Textspeicher 6 gespeichert und von dort aus abgerufen.

Ohne den Mischer 8 wäre nur die Mikroverfilmung gespeicherter Texte möglich. Diese werden jedoch gewöhnlich ohne Formular (ohne Briefkopf oder Seitenaufteilung oder Scheckformular oder Rechnungskopf) gespeichert, so daß es zumindest wünschenswert ist, das entsprechende Formular dem Text bei der Verfilmung zu überlagern. Bei den bisher bekannten COM-Printern, welche mit lichtempfindlichem Film arbeiten, erfolgt diese Formulierüberlagerung durch Abbildung eines beleuchteten Formulardias auf den lichtempfindlichen Film. Aber auch hierbei ist es nicht möglich, zusätzlich den COM-Printer zum Mikroverfilmen normaler Papiervorlagen, z.B. im DIN A4-Format, zu verwenden.

Nach der Erfindung soll nun beides möglich sein, nämlich das Überlagern von Formularen über einen zu verfilmenden Text oder das Mikroverfilmen von normalen Pa piervorlagen ohne Verfilmung von gespeichertem Text, und zwar auch mittels Laserprintern, die nicht mit lichtempfindlichem Film, sondern mit Metallfilm arbeiten.

Hierzu ist ein Scanner 11 einer üblichen Bauart vorgesehen, auf dessen Auflagefläche 11a eine Originalvorlage, z.B. eine beschriftete oder mit einem Formularvordruck versehene Papiervorlage, aufgelegt und gescannt, also in Bildpunkte zerlegt wird. Auch diese Bildpunkte werden der Schnittstelle 5 zugeführt und in einen Bildspeicher 12 eingespeichert. Sie werden als Bildpunktraster der Vorlage dem Mischer 8 zugeführt und können je nach dem am Steuerrechner 2 erteilten Befehl allein oder dem Zeichen-Punktraster überlagert zur Steuerung der Schreibeinheit 9 dienen. Im Scanner 12 ist zweckmäßigerweise ein eigener Bildspeicher vorhanden, von dem aus die Bildpunkte an die Schnittstelle 5 übergeben werden. Es ist aber gemäß der gestrichelt gezeichneten Verbindung auch möglich, z.B. im Scanner 11 gespeicherte Formular-Bildpunkte jeweils zu einem bestimmten Text in den Speicher des Steuerrechners 2 abzurufen, so daß dann das Mischen von Text und Formular schon im Steuerrechner 2 erfolgt.

## Ansprüche

1. COM-(Computer-Output-Microfilm)Printer mit einem Textspeicher, einem diesem nachgeschalteten Zeichengenerator und einer durch letzteren betätigbaren Schreibeinheit zum Aufzeichnen von im Textspeicher enthaltenen Informationen auf Mikrofilm sowie mit einem Steuerrechner zum Auswählen der auf Mikrofilm aufzuzeichnenden Informationen, wobei der Steuerrechner einen Bildschirm aufweist, dadurch gekennzeichnet, daß zwischen dem Zeichengenerator (7) und der Schreibeinheit (9) ein Mischer (8) angeordnet ist, dem aus einem Bildspeicher (12) Bildpunkte zuführbar sind, durch welche anstelle der vom Zeichengenerator (7) kommenden Zeichen oder zusätzlich hierzu, diesen überlagert, die Schreibeinheit (9) steuerbar ist, daß vor dem Textspeicher (6) bzw. dem Bildspeicher (12) eine Schnittstelle (5) angeordnet ist, mit der der Steuerrechner (2) einerseits und ein Scanner (11) zum Abtasten von Originalvorlagen andererseits verbunden ist.

2. Printer nach Anspruch 1, dadurch gekennzeichnet, daß mit dem Scanner (11) ein Speicher verbunden ist zur Speicherung der vom Scanner (11) abgetasteten Bildpunkte der Originalvorlagen, dessen Inhalt über die Schnittstelle (5) in den Bildspeicher (12) übertragbar ist.

3. Printer nach Anspruch 1 und/oder 2, dadurch gekennzeichnet, daß der Scannerspeicher mit dem Steuerrechner (2) derart verbunden ist, daß die im Scannerspeicher gespeicherten Bildpunkte der Originalvorlagen in den Steuerrechner (2) übertragbar, dort speicherbar und zusammen mit im Textspeicher (6) enthaltenen Informationen zur Steuerung der Schreibeinheit (9) abrufbar sind.

4. Verfahren zur Herstellung von Mikrofilmaufnahmen mit einem COM-Printer nach einem der vorhergehenden Ansprüche, dadurch gekennzeichnet, daß eine Originalvorlage im Scanner (11) zeilenweise abgetastet und die abgetasteten Bildpunkte im Scannerspeicher gespeichert und sodann über die Schnittstelle (5) in den Bildspeicher (12) und von dort in den Mischer (8) übertragen und schließlich durch den Steuerrechner (2) zur Steuerung der Schreibeinheit (9) abgerufen werden.

5. Verfahren nach Anspruch 4, dadurch gekennzeichnet, daß durch den Steuerrechner (2) zusätzlich Punktraster von Textzeichen vom Textspeicher (6) an den Mischer (8) übertragen und dort den Bildpunkten der Originalvorlage überlagert werden.

6. Verfahren zur Herstellung von Mikrofilmaufnahmen mit einem COM-Printer nach einem der Ansprüche 1 bis 3, dadurch gekennzeichnet, daß mehrere Originalvorlagen im Scanner (11) zei lenweise abgetastet und die abgetasteten Bildpunkte im Scannerspeicher gespeichert und von dort anschließend in einen Speicher des Steuerrrechners (2) übertragen werden und daß wahlweise Bildpunkte einer der Originalvorlagen aus dem Speicher des Steuerrechners (2) den zu verfilmenden Informationen aus dem Textspeicher (6) überlagert werden.

Fig. 1

Fig.2

EP 0 369 250 A2

A-G 5450